# EUROPEAN PATENT SPECIFICATION

(11) **EP 2 969 434 B1**
(45) Date of publication and mention of the grant of the patent: **16.05.2018**
(21) Application number: 14768092.0
(22) Date of filing: 12.03.2014
(51) Int. Cl.: B27G 19/02, B23D 45/04, B27B 5/29, B27B 9/00, B27G 19/04

(54) **BLADE GUARD FOR POWER SAW**
KLINGENSCHUTZ FÜR EINE MOTORSÄGE
PROTECTION DE LAME POUR UNE SCIE ÉLECTRIQUE

(30) Priority: 15.03.2013 US 201361793025 P
(43) Date of publication of application: 20.01.2016
(73) Proprietor: Robert Bosch GmbH, 70442 Stuttgart (DE)
(72) Inventor: WINTERNITZ, Daniel, Chicago, IL 60614 (US); KOEGEL, Jan, Oak Park, IL 60302 (US); YAO, Ji, Nanjing Jiangsu Province 210004 (CN)
(74) Representative: Isarpatent
(86) International application number: PCT/US2014/024094
(87) International publication number: WO 2014/150736

(56) References cited:
- KR-A- 20100 027 886
- US-A- 3 877 148
- US-A- 4 934 233
- US-A- 5 588 213
- US-A1- 2005 098 010
- US-B1- 6 182 548

## Description

### Field

This disclosure relates to a blade guard assembly for a power saw as per the preamble of claim 1. Such a blade guard assembly is disclosed by US 5 588 213 A.

### Background

Power saws are used for cutting and shaping workpieces, such as, hardwood, manufactured wood products, construction lumber, metal construction materials, and the like. One type of power saw, commonly referred to as a chop saw, typically includes a base configured for placement on a stand, a table, or on the ground. The base defines a workpiece support surface, which is used to support a workpiece to be cut by the chop saw. A support assembly of the chop saw extends from the base, and a cutting arm assembly is movably connected to the support assembly. The cutting arm assembly includes an electric motor configured to rotate a circular saw blade.

A workpiece is cut with the chop saw by moving the cutting arm assembly downward relative to the base, such that the rotating saw blade is moved through the workpiece. After completing the cut, the cutting arm assembly is moved upwards to extract the saw blade from the kerf formed in the workpiece.

On at least some chop saws, the cutting arm includes an upper blade guard that defines a blade guard space. An upper portion of the saw blade is positioned in the blade guard space, such that the upper blade guard covers approximately an upper half of the saw blade. Additionally, the cutting arm assembly includes a movable blade guard, sometimes referred to as a lower blade guard, which is configured to rotate about a hub relative to the upper blade guard. A biasing member biases the lower blade guard toward a closed position in which the lower blade guard covers most of a lower portion of the saw blade. When cutting a workpiece, the lower blade guard moves relative to the upper blade guard toward an open position, against the force of the biasing member, to expose a portion of the saw blade and to enable the saw blade to extend into the workpiece.

During the assembly process of known power saws, the lower blade guard is connected to the cutting arm assembly of the power saw with a fastener. Typically, the assembler adjusts the torque applied to the fastener so that the lower blade guard is sufficiently connected to the cutting arm assembly and so that the lower blade guard pivots easily with respect to the upper blade guard. Accordingly, the assembler carefully adjusts the torque applied to the fastener in a time consuming and tedious process.

Therefore, it is desirable for a power saw to include a lower blade guard that is easily and quickly connected to the cutting arm assembly of the power saw.

### Summary

According to an exemplary embodiment of the disclosure, a blade guard assembly for a power saw includes a bolt member, a blade guard housing, a mounting plate, an engagement nut, and a biasing member. The bolt member includes a head defining a first shoulder, a pivot shank extending from the head and defining a second shoulder, a support shank extending from the pivot shank, and a threaded shank extending from the support shank and located opposite from the head. The blade guard housing defines a blade space for at least partially covering a saw blade of a power saw and includes a hub defining a hub opening configured to pivotably receive the pivot shank therethrough and to seat on the first shoulder. The mounting plate is supported by a cutting arm of the power saw and defines a mounting opening configured to nonrotatably receive the support shank therethrough and to seat on the second shoulder to position the mounting plate a fixed minimum axial distance from the first shoulder. The engagement nut is threadingly engaged to the threaded shank and seated on the mounting plate. The biasing member includes a first end portion supported by the blade guard housing, a second end portion supported by the mounting plate, and a coil portion configured to receive the pivot shank therethrough. The coil portion defines a first axial height that is equal to or less than the fixed minimum axial distance. The fixed minimum axial distance is sized so that the coil portion of the biasing member remains uncompressed between the blade guard housing and the mounting plate.

According to yet another exemplary embodiment of the disclosure, a method of assembling a blade guard assembly of a power saw includes pivotably supporting a blade guard housing with a pivot shank of a bolt member configured to extend through a hub opening defined by a hub of the blade guard housing, the pivot shank extending from a head of the bolt member, the head defining a first shoulder and the pivot shank defining a second shoulder, the hub being seated on the first shoulder; and supporting a first end of a biasing member with the blade guard housing and supporting a second end of the biasing member with a mounting plate. The method further includes extending the pivot shank through a coil portion of the biasing member, the coil portion defining a first axial height; extending a support shank of the bolt member through a mounting opening defined by the mounting plate to seat the mounting plate on the second shoulder and to position the mounting plate a fixed minimum axial distance from the first shoulder; and threadingly engaging an engagement nut to a threaded shank extending from the support shank, the engagement nut being seated on the mounting plate. The first axial height is equal to or less than the fixed minimum axial distance. The fixed minimum axial distance is sized so that the coil portion of the biasing member remains uncompressed between the blade guard housing and the mounting plate after the engagement nut is seated on the mounting plate.

According to yet another exemplary embodiment of the disclosure, a power saw includes a base, a support arm extending from the base, a cutting arm pivotably supported by the support arm, and an upper blade guard supported by the cutting arm and configured to define a first blade space for receiving at least a first portion of a saw blade of a power saw. The power saw further includes a lower blade guard assembly supported by the cutting arm and having (i) a bolt member including a head defining a first shoulder, a pivot shank extending from the head and defining a second shoulder, a support shank extending from the pivot shank, and a threaded shank extending from the support shank and located opposite from the head, (ii) a blade guard housing defining a second blade space for receiving at least a second portion of the saw blade and including a hub defining a hub opening configured to pivotably receive the pivot shank therethrough and to seat on the first shoulder, (iii) a mounting plate supported by the cutting arm and defining a mounting opening configured to nonrotatably receive the support shank therethrough and to seat on the second shoulder to position the mounting plate a fixed minimum axial distance from the first shoulder, (iv) an engagement nut threadingly engaged to the threaded shank and seated against the mounting plate, and (v) a biasing member including a first end portion supported by the blade guard housing, a second end portion supported by the mounting plate, and a coil portion configured to receive the pivot shank therethrough, the coil portion defining a first axial height that is equal to or less than the fixed minimum axial distance. The fixed minimum axial distance is sized so that the coil portion of the biasing member remains uncompressed between the blade guard housing and the mounting plate.

### Brief Description of the Figures

The above-described features and advantages, as well as others, should become more readily apparent to those of ordinary skill in the art by reference to the following detailed description and the accompanying figures in which:
FIG. 1 is a left side elevational view of a power saw including a lower blade guard and a lower blade guard fastening system as described herein;
FIG. 2 is a right side perspective view of the lower blade guard and the fastening system of FIG. 1 shown in isolation;
FIG. 3 is left side perspective view of the lower blade guard and the fastening system of FIG. 1 shown in isolation;
FIG. 4 is an exploded view of the lower blade guard and the fastening system of FIG. 1;
FIG. 5 is a cross sectional view of the lower blade guard and the fastening system of FIG. 1;
FIG. 6 is cross sectional view of a shoulder bolt of the fastening system of FIG. 1;
FIG. 7 is a bottom plan view of the shoulder bolt of FIG. 6; and
FIG. 8 is an elevational view of a portion of a mounting plate of the fastening system of FIG. 1.

### Detailed Description

For the purpose of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art to which this disclosure pertains.

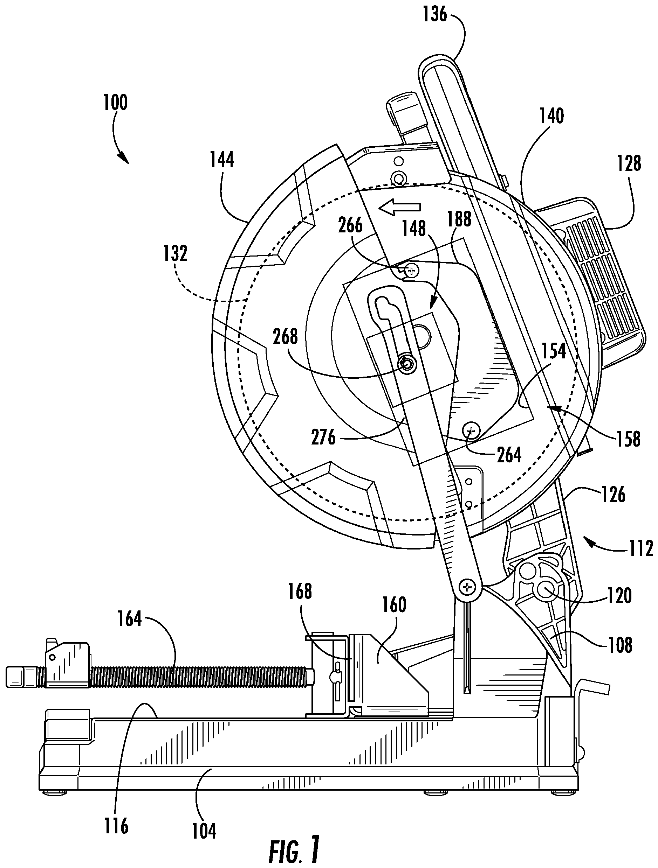

As shown in FIG. 1, a power saw, shown as a metal dry cutter / chop saw 100, includes a base 104, a support arm 108 extending from a rear side of the base, and a cutting arm assembly 112. The base 104 is configured for placement on a work surface (not shown), such as a workbench, a power saw stand, or simply a ground surface. The base 104 is at least partially formed from a rigid material such as aluminum, steel, high strength plastic, composite materials or the like. An upper surface of the base 104 is configured to define a workpiece support surface 116. The workpiece support surface 116 is a substantially flat surface on which a user positions a workpiece (not shown) to be cut by the chop saw.

The cutting arm assembly 112 is configured for pivotal connection to the support arm 108 by a pivot shaft 120. In particular, the cutting arm assembly 112 is configured to pivot about the pivot shaft 120 to and between a raised position and a lowered position (not shown).

The cutting arm assembly 112 includes a cutting arm 126, an electric motor 128, a saw blade 132 (shown in phantom), a handle portion 136, an upper blade guard 140, a lower blade guard housing / assembly 144, and a fastening system 148. The cutting arm 126 is formed from metal such as aluminum or steel. Alternatively the cutting arm 126 is formed from any high strength material as desired by those of ordinary skill in the art, such as high strength plastic, composite materials and the like.

The saw blade 132 is a circular saw blade configured to be mounted on an arbor assembly (not shown) of the cutting arm assembly 112. The saw blade 132 includes a highly abrasive perimeter, as typically provided on carbide tipped cutting blades for cutting metal. Alternatively, the perimeter of the saw blade 132 includes a plurality of cutting teeth for cutting wood, for example; or the saw blade is a diamond cutting blade for cutting tiles, for example.

The handle portion 136 is an approximately "D" shaped handle that fixedly extends from the cutting arm 126. The handle portion 136 is configured to be grasped by a user as the user pivots the cutting arm assembly 112 between the raised position and the lowered position.

The upper blade guard 140 fixedly extends from the cutting arm 126. The upper blade guard 140 is configured to cover approximately the upper half of the saw blade 132. To this end, the upper blade guard 140 defines a blade space 158 in which the upper half of the saw blade 132 is positioned. The upper blade guard 140 also defines a plateau 154 configured to receive a portion of the fastening system 148.

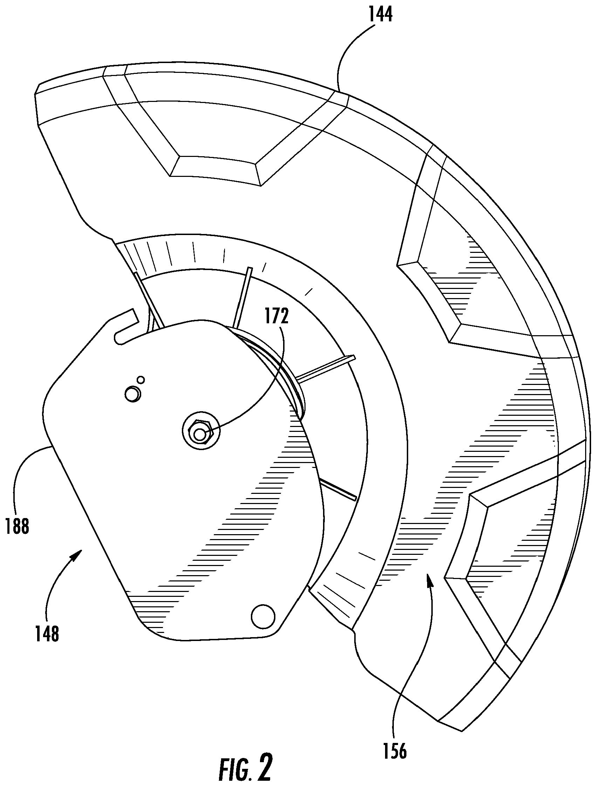

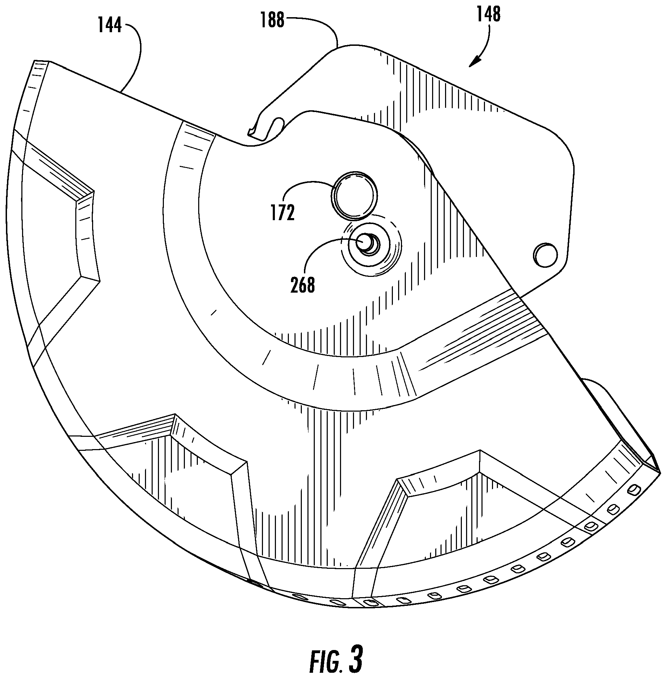

The lower blade guard housing 144 (shown separated from the cutting arm 126 in FIGs. 2-5) is configured to be pivotally connected to the cutting arm 126 by the fastening system 148 about a hub 152 of the housing 144. The lower blade guard housing 144 is configured for rotational movement between a closed position (FIG. 1) and an open position (not shown). In the closed position, a blade space / cavity 156 (FIG. 2) defined by the lower blade guard housing 144 at least partially covers approximately the lower half of the saw blade 132 (*i.e.* any portion of the saw blade not covered by the upper blade guard). In the open position, the lower half of the saw blade 132 is exposed to enable the saw blade to contact the workpiece.

The chop saw 100 further includes a fence 160 and a clamp assembly 164. The fence 160 defines a surface 168 against which a workpiece to be cut is positioned. The fence 160 is pivotable relative to the base 104 to enable the user make angled cuts with the chop saw 100. The clamp assembly 164 is connected to the base 104 and is configured to secure a workpiece against the fence 160 so that the workpiece remains stationary during the cutting operation.

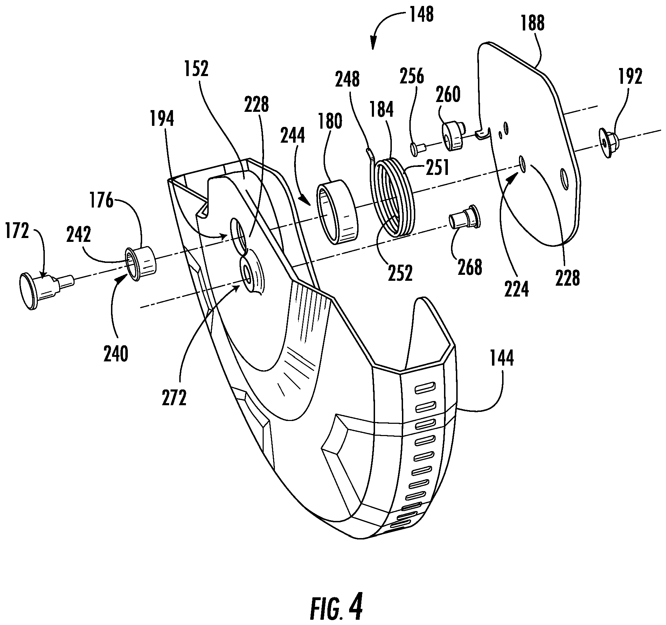

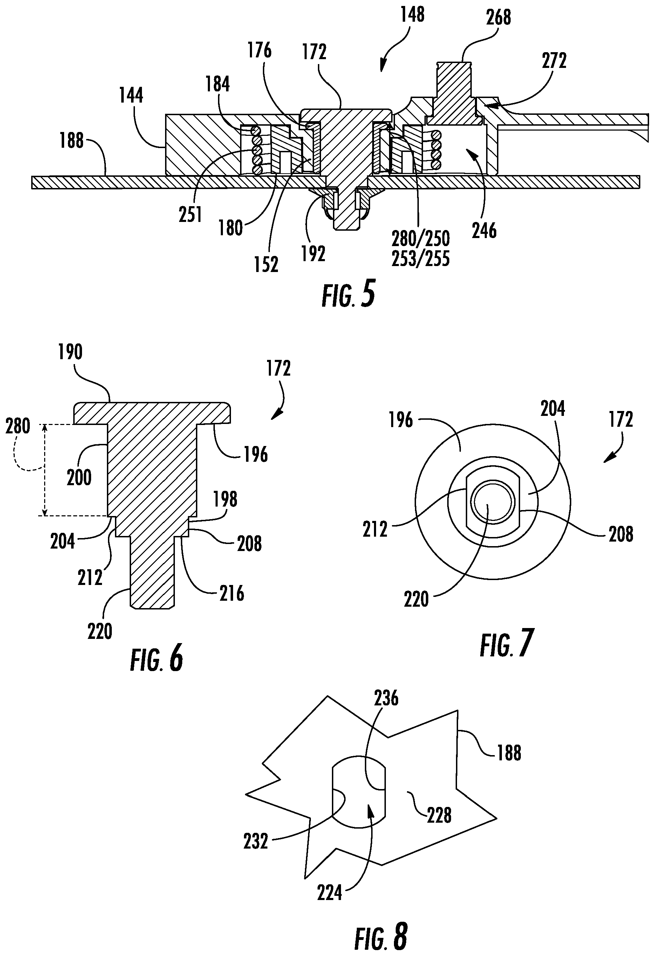

As shown in FIGs. 4 and 5, the fastening system 148 includes a bolt member shown as a shoulder bolt 172, a pivot bushing 176, a spring bushing 180, a biasing member 184, a mounting plate 188, and a fastener 192. The shoulder bolt 172 extends through a hub opening 194 defined by the hub 152 of the lower blade guard housing 144.

With reference to FIG. 6, the shoulder bolt 172 includes a head 190 and defines a pivot shoulder / first shoulder 196, a pivot shank / shaft 200, a connection shoulder / second shoulder 204, a support shank / shaft 198, a first bolt flat 208 of the support shaft, a second bolt flat 212 of the support shaft, a fastening shoulder 216, and a threaded shaft / shank 220 located opposite from the head. The pivot shaft 200 is located between the pivot shoulder 196 and the connection shoulder 204. The first flat 208 and the second flat 212 are positioned between the connection shoulder 204 and the fastening shoulder 216. The threaded shaft 220 extends from the fastening shoulder 216.

With reference to FIG. 7 the first flat 208 is spaced apart from the second flat 212. The first flat 208 and the second flat 212 form a "double-flat connection" when inserted into a correspondingly shaped mounting opening 224 (FIG. 8) in the mounting plate 188. The double-flat connection prevents rotation of the shoulder bolt 172 relative to the mounting plate 188, when the support shank 198 is received by the mounting opening 224.

With reference again to FIG. 4, the pivot bushing 176 is disposed in the hub 152 and defines an opening 240 in which the pivot shaft 200 of the shoulder bolt 172 is configured to be positioned. The pivot bushing 176 includes an interior bearing surface 242 that is configured for rotation relative to the pivot shaft 200 of the shoulder bolt 172. The pivot bushing defines an axial height 250.

The spring bushing 180 defines an opening 244 (FIG. 4) through which a portion of the lower blade guard housing 144 extends. The spring bushing 180 is positioned in a pocket 246 (FIG. 5) defined by the lower blade guard housing 144. The spring bushing 180, in one embodiment, is configured to rotate with the lower blade guard housing 144. The spring bushing 180 is received by a coil portion 251 of the biasing member and is configured to receive the pivot shank therethrough. The spring bushing 180 defines an axial height 253.

The biasing member 184 is a torsion spring that is positioned in the pocket 246 and is configured to receive the spring bushing 180. The basing member 184 includes a spring end portion 248, a spring end portion 252, and a coil portion 251 configured to receive the pivot shank 200 therethrough and defining an axial height 255. The spring end portion 248 is supported by the lower blade guard housing 144 and is configured to rotate with the lower blade guard housing. The spring end portion 252 is supported by the mounting plate 188 and is configured to remain generally stationary in response to rotation of the lower blade guard housing 144 relative thereto. In particular, the spring end 248 is positioned on a spring support member 260 that is connected to the mounting plate with a fastener 256. Movement of the spring end 248 relative to the spring end 252 generates the biasing force that biases the lower blade guard housing 144 toward the closed position.

As shown in FIG. 1, the mounting plate 188 is connected to the upper blade guard 140 of the cutting arm assembly 112. In particular, a fastener 264 (FIG. 1) connects a first end of the mounting plate 188 to the upper blade guard 140 and a fastener 266 (FIG. 1) connects a second end of the mounting plate to the upper blade guard. The mounting plate 188 is positioned in the plateau 154 defined by the upper blade guard 140.

With reference to FIGs. 4 and 8, the mounting plate 188 includes an opening structure 228 that defines the opening 224 and includes an opening flat 232 and another opening flat 236. The shoulder bolt 172 is positionable in the opening 224 such that the flat 208 contacts the flat 232 and the flat 212 contacts the flat 236. Accordingly, the flats 208, 212, 232, 236 cooperate / interlock to prevent rotation of the shoulder bolt 172 relative to the mounting plate 188. Also, when the shoulder bolt 172 is positioned in the opening 224, the connection shoulder 204 contacts the opening structure 228 so that the mounting plate is seated on the connection shoulder 204.

The fastener 192 is an engagement nut or a lock nut that is configured to be mounted on the threaded shaft 220 of the shoulder bolt 172 and seated on the mounting plate 188.

As also shown in FIGs. 4 and 5, a linkage pin 268 extends through a linkage opening 272 in the lower blade guard housing 144. As shown in FIG. 1, the linkage pin 268 cooperates with a linkage arm 276 to move the lower blade guard housing 144 to the open position as the cutting arm assembly 112 is moved toward the lowered position.

In operation, the fastening system 148 simplifies the assembly process that includes pivotally connecting the lower blade guard housing 144 to the cutting arm 126 and/or the upper blade guard 140. As shown in FIG. 4, the assembly process includes press-fitting the pivot bushing 176 into the hub opening 194 in the lower blade guard housing 144. Then, the pivot shank 200 is inserted through the opening 240 in the pivot bushing 176 and the hub opening 194 so that the hub 152 and the pivot bushing 176 are seated on the first shoulder 196.

Next, the linkage pin 268 is inserted through the opening 272. Then, the spring bushing 180 and the biasing member 184 are positioned in the pocket 246 of the lower blade guard housing 144.

To continue the assembly process, the mounting plate 188 is positioned to receive the threaded shaft 220. During insertion of the threaded shaft 220 into the opening 224, the shoulder bolt 172 is rotated so that the flat 208 is positioned against the flat 232 and the flat 212 is positioned against the flat 228. Also, the connection shoulder 204 is positioned against the mounting plate 188. Thereafter, the fastener 192 is connected to the threaded portion 220.

The shoulder bolt 172 enables the fastener 192 to be tightened to a desired torque level without affecting the ability of the lower blade guard housing 144 to pivot relative to the mounting plate 188. This is because as the fastener 192 is tightened, the mounting plate 188 is squeezed between the connection shoulder 204 and the fastener 192. A minimum axial distance 280 (FIG. 5) is defined between the pivot shoulder 196 and the mounting plate 188 and is determined by the length of the pivot shaft 200. The minimum axial distance 280 is not based on the tightness of the fastener 192. Also, the shoulder bolt 172 controls the tolerance stack-up of the components of the fastening system 148. The axial height 255 of the coil portion 251 is equal to or less than the fixed minimum axial distance 280 to enable the biasing member 184 to operate smoothly and without binding or compression of the coil portion 251. Additionally, the axial height 253 of the spring bushing 180 and the axial height 250 of the pivot bushing 176 are equal to or less than the minimum axial distance 280 so that the spring bushing and the pivot bushing remain uncompressed between the blade guard housing 144 and the mounting plate 188.

The design of the fastening system 148 eliminates the need for fine adjustments of the torque of any fastener that connects the lower blade guard housing 144 to the cutting arm assembly 112. Accordingly, an assembler can quickly and easily tighten the fastener 192 to any desired torque level without affecting the ability of the lower blade guard housing 144 to pivot relative to the mounting plate 188. In particular, the fixed minimum axial distance 280 of the pivot shaft 200 is sized to that the coil portion 251 of the biasing member 184 remains uncompressed between the lower blade guard housing 144 and the mounting plate 188. Since the coil portion 251 is uncompressed it operates smoothly without binding. Also, the fastening system 148 reduces the number and the complexity of individual components and sub-assemblies included in portion of the cutting arm assembly 112 that includes the lower blade guard housing 144.

The double flat key connection between the shoulder bolt 172 and the mounting plate 188 (or any other form fitting connection between suitable elements) enables the fastener 192 to be tightened with just one tool, since a separate tool is not required to prevent rotation of the shoulder bolt. Tightening the fastener 192 with only one tool increases the efficiency of the lower blade guard housing 144 assembly process.

Next, to complete assembly of the lower blade guard housing 144, the mounting plate 188 is connected to the upper blade guard 140 with the fastener 264 and the fastener 266.

In another embodiment the fastening system 148 is included with a miter saw or any other type of power saw.

While the disclosure has been illustrated and described in detail in the drawings and foregoing description, the same should be considered as illustrative and not restrictive in character.

## Claims

1. A blade guard (140) assembly for a power saw comprising:
a bolt member (172) including a head (190) defining a first shoulder (196), a pivot shank (200) extending from the head (190) and defining a second shoulder (204), a support shank (198) extending from the pivot shank (200), and a threaded shank (220) extending from the support shank (198) and located opposite from the head (190);
a blade guard housing (144) defining a blade space (156) for at least partially covering a saw blade (132) of a power saw and including a hub (152) defining a hub opening (194) configured to pivotably receive the pivot shank (200) therethrough and to seat on the first shoulder (196);
an engagement nut (192) threadingly engaged to the threaded shank (220) and seated on the mounting plate (188); and
a biasing member (184) including a first end portion supported by the blade guard housing (144), a second end portion supported by the mounting plate (188), and a coil portion (251) configured to receive the pivot shank (200) therethrough, the coil portion (251) defining a first axial height (255) that is equal to or less than a fixed minimum axial distance (280),
wherein the fixed minimum axial distance (280) is sized so that the coil portion (251) of the biasing member (184) remains uncompressed between the blade guard housing (144) and the mounting plate (188); and
a mounting plate (188) that can be supported by a cutting arm (112) of the power saw, **characterized in that** the mounting plate (188) defines a mounting opening (224) configured to nonrotatably receive the support shank (198) therethrough and to seat on the second shoulder (204) to position the mounting plate (188) a fixed minimum axial distance (280) from the first shoulder (196).

2. The blade guard (140) assembly of claim 1, wherein:
the support shank (198) defines at least one bolt flat (212), and
the mounting opening (224) defines at least one opening flat (232) configured to cooperate with the at least one bolt flat (212) to prevent rotation of the bolt member (172) relative to the mounting plate (188).

3. The blade guard (140) assembly of claim 1, further comprising:
a spring bushing (180) received by the coil portion (251) of the biasing member (184) and configured to receive the pivot shank (200) therethrough, the spring bushing (180) defining a second axial height (250) that is equal to or less than the fixed minimum axial distance (280),
wherein the fixed minimum axial distance (280) is sized so that the spring bushing (180) remains uncompressed between the blade guard housing (144) and the mounting plate (188).

4. The blade guard (140) assembly of claim 3, further comprising:
a pivot bushing (176) disposed in the hub opening (194) and configured to receive the pivot shank (200) therethrough, the pivot bushing (176) defining a third axial height that is equal to or less than the fixed minimum axial distance (280),
wherein the fixed minimum axial distance (280) is sized so that the pivot bushing (176) remains uncompressed between the first shoulder (196) and the mounting plate (188).

5. The blade guard (140) assembly of claim 1, wherein the second end portion of the biasing member (184) is supported by a spring support member (260) extending from the mounting plate (188).

6. A method of assembling a blade guard (140) assembly of a power saw comprising:
pivotably supporting a blade guard housing (144) with a pivot shank (200) of a bolt member (172) configured to extend through a hub opening (194) defined by a hub (152) of the blade guard housing (144), the pivot shank (200) extending from a head (190) of the bolt member (172), the head (190) defining a first shoulder (196) and the pivot shank (200) defining a second shoulder (204), the hub (152) being seated on the first shoulder (196);
supporting a first end of a biasing member (184) with the blade guard housing (144) and supporting a second end of the biasing member (184) with a mounting plate (188);
extending the pivot shank (200) through a coil portion (251) of the biasing member (184), the coil portion (251) defining a first axial height (255);
threadingly engaging an engagement nut (192) to a threaded shank (220) extending from the support shank (198), the engagement nut (192) being seated on the mounting plate (188),
wherein the first axial height (255) is equal to or less than the fixed minimum axial distance (280), and
wherein the fixed minimum axial distance (280) is sized so that the coil portion (251) of the biasing member (184) remains uncompressed between the blade guard housing (144) and the mounting plate (188) after the engagement nut (192) is seated on the mounting plate (188); **characterized in**
extending a support shank (198) of the bolt member (172) through a mounting opening (224) defined by the mounting plate (188) to seat the mounting plate (188) on the second shoulder (204) and to position the mounting plate (188) a fixed minimum axial distance (280) from the first shoulder (196).

7. The method of claim 6, further comprising:
interlocking a bolt flat (212) defined by the support shank (198) and an opening flat (232) defined by the bolt opening to prevent rotation of the bolt member (172) relative to the mounting plate (188).

8. The method of claim 6, further comprising:
extending the pivot shank (200) though a pivot bushing (176) positioned between the pivot shank (200) and the hub (152), the pivot bushing (176) defining a second axial height (250) equal to or less than the fixed minimum axial distance (280),
wherein the fixed minimum axial distance (280) is sized so that the pivot bushing (176) remains uncompressed between the head (190) and the mounting plate (188) after the engagement nut (192) is seated on the mounting plate (188).

9. The method of claim 8, further comprising:
extending the pivot shank (200) though a spring bushing (180) positioned between the hub (152) and the coil portion (251), the spring bushing (180) defining a third axial height equal to or less than the fixed minimum axial distance (280),
wherein the fixed minimum axial distance (280) is sized so that the spring bushing (180) remains uncompressed between the blade guard housing (144) and the mounting plate (188) after the engagement nut (192) is seated on the mounting plate (188).

10. The power saw of claim 1, further comprising:
a base;
a support arm extending from the base;
a cutting arm (112) pivotably supported by the support arm;
an upper blade guard (140) supported by the cutting arm (112) and configured to define a first blade space (156) for receiving at least a first portion of a saw blade (132) of a power saw; and
a lower blade guard (140) assembly supported by the cutting arm (112).

11. The power saw of claim 10, wherein:
the support shank (198) defines at least one bolt flat (212), and
the mounting opening (224) defines at least one opening flat (232) configured to cooperate with the at least one bolt flat (212) to prevent rotation of the bolt member (172) relative to the mounting plate (188).

12. The power saw of claim 10, further comprising:
a spring bushing (180) received by the coil portion (251) of the biasing member (184) and configured to receive the pivot shank (200) therethrough, the spring bushing (180) defining a second axial height (250) that is equal to or less than the fixed minimum axial distance (280),
wherein the fixed minimum axial distance (280) is sized so that the spring bushing (180) remains uncompressed between the blade guard housing (144) and the mounting plate (188).

13. The power saw of claim 12, further comprising:
a pivot bushing (176) disposed in the hub opening (194) and configured to receive the pivot shank (200) therethrough, the pivot bushing (176) defining a third axial height that is equal to or less than the fixed minimum axial distance (280),
wherein the fixed minimum axial distance (280) is sized so that the pivot bushing (176) remains uncompressed between the blade guard housing (144) and the mounting plate (188).

14. The power saw of claim 10, wherein the second end portion of the biasing member (184) is supported by a spring support member (260) extending from the mounting plate (188).

## Patentansprüche

1. Blattschutzbaugruppe (140) für eine Motorsäge, aufweisend:
ein Schraubenelement (172), umfassend einen Kopf (190), welcher eine erste Schulter (196) definiert, einen Drehzapfen (200), welcher sich aus dem Kopf (190) erstreckt und eine zweiten Schulter (204) definiert, einen Tragzapfen (198), welcher sich aus dem Drehzapfen (200) erstreckt, und einen Gewindezapfen (220), welcher sich aus dem Tragzapfen (198) erstreckt und dem Kopf (190) gegenüber liegend angeordnet ist;
ein Blattschutzgehäuse (144), welches einen Blattraum (156) definiert, um zumindest teilweise ein Sägeblatt (132) einer Motorsäge abzudecken, und eine Nabe (152) umfasst, welche eine Nabenöffnung (194) definiert, welche dafür ausgelegt ist, den Drehzapfen (200) drehbar dort hindurch aufzunehmen und auf der ersten Schulter (196) zu lagern;
eine Eingriffsmutter (192), welche gewindemäßig mit dem Gewindezapfen (220) in Eingriff ist und auf der Montageplatte (188) lagert; und
ein Vorspannelement (184), umfassend einen ersten Endabschnitt, welcher von dem Blattschutzgehäuse (144) gehalten wird, einen zweiten Endabschnitt, welcher von der Montageplatte (188) gehalten wird, und einen Spiralenabschnitt (251), welcher dafür ausgelegt ist, den Drehzapfen (200) dort hindurch aufzunehmen, wobei der Spiralenabschnitt (251) eine erste axialen Höhe (255) definiert, welche gleich oder kleiner als ein fester minimaler axialer Abstand (280) ist,
wobei der feste minimale axiale Abstand (280) so bemessen ist, dass der Spiralenabschnitt (251) des Vorspannelements (184) zwischen dem Blattschutzgehäuse (144) und der Montageplatte (188) unkomprimiert bleibt; und eine Montageplatte (188), welche von einem Schneidarm (112) der Motorsäge gehalten werden kann, **dadurch gekennzeichnet, dass** die Montageplatte (188) eine Montageöffnung (224) definiert, welche dafür ausgelegt ist, den Tragzapfen (198) dort hindurch drehfest aufzunehmen und auf der zweiten Schulter (204) zu lagern, um die Montageplatte (188) in einem festen minimalen axialen Abstand (280) von der ersten Schulter (196) zu positionieren.

2. Blattschutzbaugruppe (140) nach Anspruch 1, wobei:
der Tragzapfen (198) mindestens eine Schraubenabflachung (212) definiert, und
die Montageöffnung (224) mindestens eine Öffnungsabflachung (232) definiert, welche dafür ausgelegt ist, mit der mindestens einen Schraubenabflachung (212) zusammenzuwirken, um eine Drehung des Schraubenelements (172) in Bezug auf die Montageplatte (188) zu verhindern.

3. Blattschutzbaugruppe (140) nach Anspruch 1, weiter aufweisend:
eine Federbuchse (180), welche von dem Spiralenabschnitt (251) des Vorspannelements (184) aufgenommen wird und dafür ausgelegt ist, den Drehzapfen (200) dort hindurch aufzunehmen, wobei die Federbuchse (180) eine zweite axiale Höhe (250) definiert, welche gleich oder kleiner als der feste minimale axiale Abstand (280) ist,
wobei der feste minimale axiale Abstand (280) so bemessen ist, dass die Federbuchse (180) zwischen dem Blattschutzgehäuse (144) und der Montageplatte (188) unkomprimiert bleibt.

4. Blattschutzbaugruppe (140) nach Anspruch 3, weiter aufweisend:
eine Drehbuchse (176), welche in der Nabenöffnung (194) angeordnet und dafür ausgelegt ist, den Drehzapfen (200) dort hindurch aufzunehmen, wobei die Drehbuchse (176) eine dritte axiale Höhe definiert, welche gleich oder kleiner als der feste minimale axiale Abstand (280) ist,
wobei der feste minimale axiale Abstand (280) so bemessen ist, dass die Drehbuchse (176) zwischen der ersten Schulter (196) und der Montageplatte (188) unkomprimiert bleibt.

5. Blattschutzbaugruppe (140) nach Anspruch 1, wobei der zweite Endabschnitt des Vorspannelements (184) von einem Federhalteelement (260) gehalten wird, welches sich aus der Montageplatte (188) erstreckt.

6. Verfahren zum Zusammenbauen einer Blattschutzbaugruppe (140) für eine Motorsäge, aufweisend:
drehbares Halten eines Blattschutzgehäuses (144) mit einem Drehzapfen (200) eines Schraubenelements (172), welches dafür ausgelegt ist, sich durch eine Nabenöffnung (194) zu erstrecken, welche durch eine Nabe (152) des Blattschutzgehäuses (144) definiert wird, wobei sich der Drehzapfen (200) aus einem Kopf (190) des Schraubenelements (172) erstreckt, wobei der Kopf (190) eine erste Schulter (196) definiert und der Drehzapfen (200) eine zweite Schulter (204) definiert, wobei die Nabe (152) auf der ersten Schulter (196) gelagert wird;
Halten eines ersten Endes eines Vorspannelements (184) mit dem Blattschutzgehäuse (144) und Halten eines zweiten Endes des Vorspannelements (184) mit einer Montageplatte (188);
Erstrecken des Drehzapfens (200) durch einen Spiralenabschnitt (251) des Vorspannelements (184), wobei der Spiralenabschnitt (251) eine erste axiale Höhe (255) definiert;
gewindemäßig in Eingriff bringen einer Eingriffsmutter (192) mit einem Gewindezapfen (220), welcher sich aus dem Tragzapfen (198) erstreckt, wobei die Eingriffsmutter (192) auf der Montageplatte (188) gelagert wird, wobei die erste axiale Höhe (255) gleich oder kleiner als der feste minimale axiale Abstand (280) ist, und
wobei der feste minimale axiale Abstand (280) so bemessen ist, dass der Spiralenabschnitt (251) des Vorspannelements (184) zwischen dem Blattschutzgehäuse (144) und der Montageplatte (188) unkomprimiert bleibt, nachdem die Gewindemutter (192) auf der Montageplatte (188) gelagert worden ist; **gekennzeichnet durch** Erstrecken eines Tragzapfens (198) des Schraubenelements (172) durch die Montageöffnung (224), welche durch die Montageplatte (188) definiert wird, um die Montageplatte (188) auf der zweiten Schulter (204) zu lagern und die Montageplatte (188) in einem festen minimalen axialen Abstand (280) von der ersten Schulter (196) zu positionieren.

7. Verfahren nach Anspruch 6, weiter aufweisend:
Ineinandergreifen einer Schraubenabflachung (212), welche durch den Tragzapfen (198) definiert wird, und einer Öffnungsabflachung (232), welche durch die Schraubenöffnung definiert wird, um eine Drehung des Schraubenelements (172) in Bezug auf die Montageplatte (188) zu verhindern.

8. Verfahren nach Anspruch 6, weiter aufweisend:
Erstrecken des Drehzapfens (200) durch eine Drehbuchse (176), welche zwischen dem Drehzapfen (200) und der Nabe (152) angeordnet ist, wobei die Drehbuchse (176) eine zweite axiale Höhe (250) definiert, welche gleich oder kleiner als der feste minimale axiale Abstand (280) ist,
wobei der feste minimale axiale Abstand (280) so bemessen ist, dass die Drehbuchse (176) zwischen dem Kopf (190) und der Montageplatte (188) unkomprimiert bleibt, nachdem die Eingriffsmutter (192) auf der Montageplatte (188) gelagert worden ist.

9. Verfahren nach Anspruch 8, weiter aufweisend:
Erstrecken des Drehzapfens (200) durch eine Federbuchse (180), welche zwischen der Nabe (152) und dem Spiralenabschnitt (251) angeordnet ist, wobei die Federbuchse (180) eine dritte axiale Höhe definiert, welche gleich oder kleiner als der feste minimale axiale Abstand (280) ist,
wobei der feste minimale axiale Abstand (280) so bemessen ist, dass die Federbuchse (180) zwischen dem Blattschutzgehäuse (144) und der Montageplatte (188) unkomprimiert bleibt, nachdem die Eingriffsmutter (192) auf der Montageplatte (188) gelagert worden ist.

10. Motorsäge nach Anspruch 1, weiter aufweisend:
ein Unterteil;
einen Haltearm, welcher sich aus dem Unterteil erstreckt;
einen Schneidarm (112), welcher drehbar durch den Tragarm gehalten ist;
einen oberen Blattschutz (140), welcher durch den Schneidarm (112) gehalten wird und dafür ausgelegt ist, um einen ersten Blattraum (156) zum Aufnehmen mindestens eines ersten Abschnitts eines Sägeblatts (132) einer Motorsäge zu definieren; und
eine untere Blattschutzbaugruppe (140), welche von dem Schneidarm (112) gehalten ist.

11. Motorsäge nach Anspruch 10, wobei:
der Tragzapfen (198) mindestens eine Schraubenabflachung (212) definiert, und
die Montageöffnung (224) mindestens eine Öffnungsabflachung (232) definiert, welche dafür ausgelegt ist, mit der mindestens einen Schraubenabflachung (212) zusammenzuwirken, um eine Drehung des Schraubenelements (172) in Bezug auf die Montageplatte (188) zu verhindern.

12. Motorsäge nach Anspruch 10, weiter aufweisend:
eine Federbuchse (180), welche von dem Spiralenabschnitt (251) des Vorspannelements (184) aufgenommen wird und dafür ausgelegt ist, den Drehzapfen (200) dort hindurch aufzunehmen, wobei die Federbuchse (180) eine zweite axiale Höhe (250) definiert, welche gleich oder kleiner als der feste minimale axiale Abstand (280) ist,
wobei der feste minimale axiale Abstand (280) so bemessen ist, dass die Federbuchse (180) zwischen dem Blattschutzgehäuse (144) und der Montageplatte (188) unkomprimiert bleibt.

13. Motorsäge nach Anspruch 12, weiter aufweisend:
eine Drehbuchse (176), welche in der Nabenöffnung (194) angeordnet und dafür ausgelegt ist, den Drehzapfen (200) dort hindurch aufzunehmen, wobei die Drehbuchse (176) eine dritte axiale Höhe definiert, welche gleich oder kleiner als der feste minimale axiale Abstand (280) ist,
wobei der feste minimale axiale Abstand (280) so bemessen ist, dass die Drehbuchse (176) zwischen dem Blattschutzgehäuse (144) und der Montageplatte (188) unkomprimiert bleibt.

14. Motorsäge nach Anspruch 10, wobei der zweite Endabschnitt des Vorspannelements (184) von einem Federhalteelement (260) gehalten wird, welches sich aus der Montageplatte (188) erstreckt.

## Revendications

1. Ensemble protège-lame (140) pour une scie électrique comprenant :
un élément de boulon (172) comprenant une tête (190) définissant un premier épaulement (196), une tige de pivotement (200) s'étendant depuis la tête (190) et définissant un second épaulement (204), une tige de support (198) s'étendant depuis la tige de pivotement (200) et une tige filetée (220) s'étendant depuis la tige de support (198) et située à l'opposé de la tête (190) ;
un logement de protège-lame (144) définissant un espace de lame (156) pour recouvrir au moins partiellement une lame de scie (132) d'une scie électrique et comprenant un moyeu (152) définissant une ouverture de moyeu (194) configurée pour recevoir de manière pivotante la tige de pivotement (200) à travers cette dernière et pour se placer sur le premier épaulement (196) ;
un écrou de mise en prise (192) mis en prise par filetage avec la tige filetée (220) et placé sur la plaque de montage (188) ; et
un élément de sollicitation (184) comprenant une première partie d'extrémité supportée par le logement de protège-lame (144), une seconde partie d'extrémité supportée par la plaque de montage (188) et une partie de bobine (251) configurée pour recevoir la tige de pivotement (200) à travers cette dernière, la partie de bobine (251) définissant une première hauteur axiale (255) qui est égale ou inférieure à une distance axiale minimale fixée (280),
dans lequel la distance axiale minimale fixée (280) est dimensionnée de telle sorte que la partie de bobine (251) de l'élément de sollicitation (184) reste non comprimée entre le logement de protège-lame (144) et la plaque de montage (188) ; et
une plaque de montage (188) qui peut être supportée par un bras de coupe (112) de la scie électrique, **caractérisé en ce que** la plaque de montage (188) définit une ouverture de montage (224) configurée pour recevoir de manière non rotative la tige de support (198) à travers cette dernière et pour se placer sur le second épaulement (204) pour positionner la plaque de montage (188) à une distance axiale minimale fixée (280) du premier épaulement (196).

2. Ensemble protège-lame (140) selon la revendication 1, dans lequel :
la tige de support (198) définit au moins un plat de boulon (212) et
l'ouverture de montage (224) définit au moins un plat d'ouverture (232) configuré pour coopérer avec le ou les plats de boulon (212) pour empêcher la rotation de l'élément de boulon (172) par rapport à la plaque de montage (188).

3. Ensemble protège-lame (140) selon la revendication 1, comprenant en outre :
une douille de ressort (180) reçue par la partie de bobine (251) de l'élément de sollicitation (184) et configurée pour recevoir la tige de pivotement (200) à travers cette dernière, la douille de ressort (180) définissant une deuxième hauteur axiale (250) qui est égale ou inférieure à la distance axiale minimale fixée (280),
dans lequel la distance axiale minimale fixée (280) est dimensionnée de telle sorte que la douille de ressort (180) reste non comprimée entre le logement de protège-lame (144) et la plaque de montage (188).

4. Ensemble protège-lame (140) selon la revendication 3, comprenant en outre :
une douille de pivotement (176) disposée dans l'ouverture de moyeu (194) et configurée pour recevoir la tige de pivotement (200) à travers cette dernière, la douille de pivotement (176) définissant une troisième hauteur axiale qui est égale ou inférieure à la distance axiale minimale fixée (280),
dans lequel la distance axiale minimale fixée (280) est dimensionnée de telle sorte que la douille de pivotement (176) reste non comprimée entre le premier épaulement (196) et la plaque de montage (188).

5. Ensemble protège-lame (140) selon la revendication 1, dans lequel la seconde partie d'extrémité de l'élément de sollicitation (184) est supportée par un élément de support de ressort (260) s'étendant depuis la plaque de montage (188).

6. Procédé s'assemblage d'un ensemble protège-lame (140) pour une scie électrique consistant :
à supporter de manière pivotante un logement de protège-lame (144) avec une tige de pivotement (200) d'un élément de boulon (172) configuré pour s'étendre à travers une ouverture de moyeu (194) définie par un moyeu (152) du logement de protège-lame (144), la tige de pivotement (200) s'étendant depuis une tête (190) de l'élément de boulon (172), la tête (190) définissant un premier épaulement (196) et la tige de pivotement (200) définissant un second épaulement (204), le moyeu (152) étant placé sur le premier épaulement (196) ;
à supporter une première extrémité d'un élément de sollicitation (184) avec le logement de protège-lame (144) et à supporter une seconde extrémité de l'élément de sollicitation (184) avec une plaque de montage (188) ;
à étendre la tige de pivotement (200) à travers une partie de bobine (251) de l'élément de sollicitation (184), la partie de bobine (251) définissant une première hauteur axiale (255) ;
à mettre en prise par filetage un écrou de mise en prise (192) avec une tige filetée (220) s'étendant depuis la tige de support (198), l'écrou de mise en prise (192) étant placé sur la plaque de montage (188),
dans lequel la première hauteur axiale (255) est égale ou inférieure à la distance axiale minimale fixée (280) et
dans lequel la distance axiale minimale fixée (280) est dimensionnée de telle sorte que la partie de bobine (251) de l'élément de sollicitation (184) reste non comprimée entre le logement de protège-lame (144) et la plaque de montage (188) après que l'écrou de mise en prise (192) est placé sur la plaque de montage (188) ; **caractérisé en ce qu'**il consiste :
à étendre une tige de support (198) de l'élément de boulon (172) à travers une ouverture de montage (224) définie par la plaque de montage (188) pour placer la plaque de montage (188) sur le second épaulement (204) et pour positionner la plaque de montage (188) à une distance axiale minimale fixée (280) du premier épaulement (196).

7. Procédé selon la revendication 6, consistant en outre :
à interverrouiller un plat de boulon (212) défini par la tige de support (198) et le plat d'ouverture (232) défini par l'ouverture de boulon pour empêcher la rotation de l'élément de boulon (172) par rapport à la plaque de montage (188).

8. Procédé selon la revendication 6, consistant en outre :
à étendre la tige de pivotement (200) à travers une douille de pivotement (176) positionnée entre la tige de pivotement (200) et le moyeu (152), la douille de pivotement (176) définissant une deuxième hauteur axiale (250) égale ou inférieure à la distance axiale minimale fixée (280),
dans lequel la distance axiale minimale fixée (280) est dimensionnée de telle sorte que la douille de pivotement (176) reste non comprimée entre la tête (190) et la plaque de montage (188) après que l'écrou de mise en prise (192) est placé sur la plaque de montage (188).

9. Procédé selon la revendication 8, consistant en outre :
à étendre la tige de pivotement (200) à travers une douille de ressort (180) positionnée entre le moyeu (152) et la partie de bobine (251), la douille de ressort (180) définissant une troisième hauteur axiale égale ou inférieure à la distance axiale minimale fixée (280),
dans lequel la distance axiale minimale fixée (280) est dimensionnée de telle sorte que la douille de ressort (180) reste non comprimée entre le logement de protège-lame (144) et la plaque de montage (188) après que l'écrou de mise en prise (192) est placé sur la plaque de montage (188).

10. Scie électrique selon la revendication 1, comprenant en outre :
une base ;
un bras de support s'étendant depuis la base ;
un bras de coupe (112) supporté de manière pivotante par le bras de support ;
un protège-lame supérieur (140) supporté par le bras de coupe (112) et configuré pour définir un premier espace de lame (156) pour recevoir au moins une première partie d'une lame de scie (132) d'une scie électrique ; et
un ensemble protège-lame inférieur (140) supporté par le bras de coupe (112).

11. Scie électrique selon la revendication 10, dans laquelle :
la tige de support (198) définit au moins un plat de boulon (212) et
l'ouverture de montage (224) définit au moins un plat d'ouverture (232) configuré pour coopérer avec le ou les plats de boulon (212) pour empêcher la rotation de l'élément de boulon (172) par rapport à la plaque de montage (188).

12. Scie électrique selon la revendication 10, comprenant en outre :
une douille de ressort (180) reçue par la partie de bobine (251) de l'élément de sollicitation (184) et configurée pour recevoir la tige de pivotement (200) à travers cette dernière, la douille de ressort (180) définissant une deuxième hauteur axiale (250) qui est égale ou inférieure à la distance axiale minimale fixée (280),
dans lequel la distance axiale minimale fixée (280) est dimensionnée de telle sorte que la douille de ressort (180) reste non comprimée entre le logement de protège-lame (144) et la plaque de montage (188).

13. Scie électrique selon la revendication 12, comprenant en outre :
une douille de pivotement (176) disposée dans l'ouverture de moyeu (194) et configurée pour recevoir la tige de pivotement (200) à travers cette dernière, la douille de pivotement (176) définissant une troisième hauteur axiale qui est égale ou inférieure à la distance axiale minimale fixée (280),
dans lequel la distance axiale minimale fixée (280) est dimensionnée de telle sorte que la douille de pivotement (176) reste non comprimée entre le logement de protège-lame (144) et la plaque de montage (188).

14. Scie électrique selon la revendication 10, dans laquelle la seconde partie d'extrémité de l'élément de sollicitation (184) est supportée par un élément de support de ressort (260) s'étendant depuis la plaque de montage (188).
